# EUROPEAN PATENT SPECIFICATION

(11) **EP 1 515 083 B1**
(45) Date of publication and mention of the grant of the patent: **13.07.2011**
(21) Application number: 03730584.4
(22) Date of filing: 22.05.2003
(51) Int. Cl.: F21V 1/00

(54) **LIGHT SOURCE SUPPORT DEVICE, LIGHTING DEVICE, AND LIQUID CRYSTAL DISPLAY**
LICHTQUELLENSTÜTZVORRICHTUNG, BELEUCHTUNGSVORRICHTUNG UND FLÜSSIGKRISTALLANZEIGE
DISPOSITIF SUPPORT DE SOURCE LUMINEUSE, DISPOSITIF D'ECLAIRAGE ET ECRAN A CRISTAUX LIQUIDES

(30) Priority: 27.05.2002 JP 2002152180
(43) Date of publication of application: 16.03.2005
(73) Proprietor: Sharp Kabushiki Kaisha, Osaka-shi, Osaka 545-8522 (JP)
(72) Inventor: IDEI, Kazuya, Kuki-shi, Saitama 346-0003 (JP); ABE, Takeo, Suita-shi, Osaka 565-0855 (JP)
(74) Representative: Müller - Hoffmann & Partner
(86) International application number: PCT/JP2003/006403
(87) International publication number: WO 2003/100317

(56) References cited:
- GB-A- 469 239
- JP-A- 2001 210 126
- JP-A- 2001 266 634
- US-A- 5 797 675
- US-A1- 2001 048 595

## Description

### TECHNICAL FIELD

The present invention relates to an apparatus that supports a light source, which-can be used, for example, in a lighting apparatus used as a backlight apparatus of a liquid crystal display.

### BACKGROUND ART

In recent years, some extremely large liquid crystal displays have been developed. In such kinds of liquid crystal displays, a backlight is used in which fluorescent tubes are disposed in parallel to a liquid crystal panel.

In order to fabricate a large-size liquid crystal display, by necessity the fluorescent tubes used in the backlight must be of an extended length. However, even though the displays are large they are also required to be of a small thickness, and therefore fluorescent tubes having a cross section of a small first diameter have come to be used as light sources. For this reason, when the fluorescent tubes disposed in parallel are supported only at both ends, the problem arises that the support strength for the fluorescent tubes is insufficient, resulting in deformation and breakage.

Therefore to enhance the strength of support for the fluorescent tubes a light source support that supports the middle part of a fluorescent tube is required. An example of such kind of light source support is described in JP Patent Publication (Kokai) No. 2001-210126 A. The technology described in this publication will hereafter be described referring to Fig. 12.

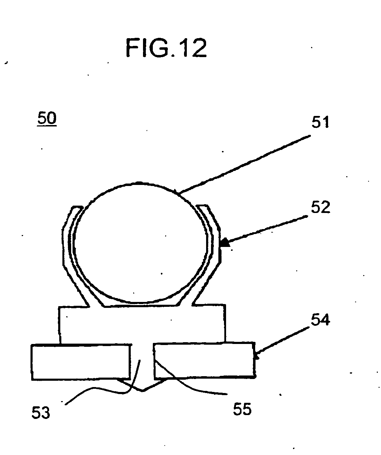

Fig. 12 is an installation drawing of a light source support 50 described in the above publication. In Fig. 12, light source support 50 comprises a support member 52 of a segment-shaped grip form having an opening in one part to retain the circumference of the circular section of a light source 51, and a fastener member 53 maintaining light source support 50 on a reflector plate 54 via a through hole 55 provided in reflector plate 54.

Further, light source support 50 is fabricated from flexible transparent material, and by using this to support the middle part of a fluorescent tube, deformation and damage of the fluorescent tube are prevented, and furthermore, the occurrence of a decline in display brightness or of brightness inconsistencies in a liquid crystal display are also prevented.

However, while light source support 50 disclosed in the above conventional art is effective in preventing deformation or damage to a fluorescent tube and also in preventing declines in display brightness or inconsistencies in brightness in a liquid crystal display, because it is also disposed penetrating through reflector plate 54 in addition to being formed from transparent material, a problem arises that light irradiated from a light source passes through the light source support material or the through hole provided in the reflector plate and permeates to the side of the reflector plate opposite the side on which the light source is disposed. US 5,797,675 describes a spring clip for neon bulbs which allows for multiple modes of movement between the bulb supporting portion and the stationary stem of the clip.

The above objects are solved by the claimed matter according to the independent claims.

### DISCLOSURE OF THE INVENTION

Therefore, to solve the above problem, the present invention provides a light source support having a support member supporting a light source, and a fastener member, wherein, by inserting the fastener member into a through hole provided in a mounting plate, the light source supported by the support member is attached to the mounting plate, characterized in that the support member is fabricated from transparent material and the fastener member is fabricated from coloured material. By fabricating the light source support in this manner it is possible to prevent light emitted from a light source from permeating to the side of the mounting plate opposite the light source.

Further, the present invention provides a light source support having a support member supporting a light source, and a fastener member, wherein, by inserting the fastener member into a through hole provided in a mounting plate, the light source supported by the support member is attached to the mounting plate, characterized in that the light source support is fabricated from transparent material and provided with a means for preventing light transmission that prevents light emitted from the light source from permeating via the through hole to the side of the mounting plate opposite to the light source side. By fabricating the light source support in this manner it is possible to prevent light emitted from a light source from permeating to the side of the mounting plate opposite the light source.

At this time, since the production process may become complicated when elements of a plurality of colours are fabricated into an integrated whole, the means for preventing light transmission comprises a coloured membrane provided on the surface of the side of the fastener member opposite the side on which the light source is disposed.

Similarly, according to another aspect of the invention, the means for preventing light transmission comprises a cover covering a part protruding from the mounting plate when the fastener member of the light source support is attached to the mounting plate. When fabricated in this manner, the light source support may be fabricated in a single colour to enable low cost production.

According to another aspect of the present invention the fastener member is disposed in a position facing a light source supported by the support member. When fabricated in this manner, a coloured fastener member is not noticeable since it cannot be viewed from the light source side, and when this light source support is used in a lighting apparatus requiring planar, uniform light, brightness inconsistencies caused by a coloured fastener member can be prevented.

According to a further aspect, the present invention provides a light source support fabricated from transparent material and comprising a base, a support member supporting a light source provided on one side of the base, and a member for fastening provided on the other side of the base, characterized in that by fastening a coloured fastening means to the member for fastening via a through hole provided in a mounting plate, the base is fastened to the mounting plate. By fabricating the light source support in this manner, it is possible to prevent light emitted from a light source from permeating to the side of the mounting plate opposite the light source.

According to a further aspect of the present invention the hole for mounting is disposed in a position facing the light source supported by the support member. When the light source support is fabricated in this manner, a coloured fastener means is not noticeable since it cannot be viewed from the light source side, and when this light source support is used in a lighting apparatus requiring planar, uniform light, brightness inconsistencies caused by a coloured fastener member can be prevented.

According to a still further aspect, the present invention provides a light source support, characterized in that, in the above light source support, a protrusion provided in a condition protruding further on the light source side than the light source is provided in an integrated fashion. When the light source support is fabricated in this manner, if an optical member such as a diffusion plate is disposed on the side of a light source opposite a reflector plate in the light source support, the amount of warping of the optical member can be controlled by means of the protrusion.

According to a further aspect, the present invention provides a lighting apparatus comprising a light source support, a light source supported by the support member of the light source support, and, as the mounting plate, a reflector plate reflecting light emitted from the light source.

According to a still further aspect, the present invention provides a lighting apparatus characterized by comprising a light source support, a light source supported by the support member of the light source support, a reflector plate reflecting light emitted from the light source as the mounting plate, a diffusion plate provided in the direction opposite the direction in which the reflector plate is disposed with respect to the light source and diffusing and transmitting light emitted from the light source, and a protrusion comprised as an integrated part of the light source support and provided in a condition protruding towards the diffusion plate.

According to a further aspect, the present invention provides a liquid crystal display apparatus characterized by having the above lighting apparatus and a liquid crystal panel provided on the side of the diffusion plate opposite the side on which the light source is disposed.

### BRIEF DESCRIPTION OF THE DRAWINGS

Fig. 1A is a cross section of the light source support of the first embodiment of the present invention.
Fig. 1B is a cross section of a case where the light source support of Fig. 1A is attached to a reflector plate and a light source is supported by the light source support.
Fig. 2A is a cross section of the light source support of the second embodiment of the present invention.
Fig. 2B is a cross section of a case where the light source support of Fig. 2A is attached to a reflector plate and a light source is supported by the light source support.
Fig. 3A, B are cross sections of the case where the support member and fastener member of the second embodiment are singularized.
Fig. 4A shows a schematic elevation of the lighting apparatus of the present invention.
Fig. 4B is a schematic cross section of Fig. 4A.
Fig. 5A, B are cross sections showing a modified form of the second embodiment, corresponding Fig 3A, B.
Fig. 6A is a cross section of the light source support of the third embodiment of the present invention.
Fig. 6B is a cross section of a case where the light source support of Fig. 6A is attached to a reflector plate and a light source is supported by the light source support.
Fig. 7A is a cross section of the light source support of the fourth embodiment of the present invention.
Fig. 7B is a cross section of a case where the light source support of Fig. 7A is attached to a reflector plate and a light source is supported by the light source support.
Fig. 8A is a cross section of the light source support of the fifth embodiment of the present invention.
Fig. 8B is a cross section of a case where the light source support of Fig. 8A is attached to a reflector plate and a light source is supported by the light source support.
Fig. 9A is a cross section of the light source support of the sixth embodiment of the present invention.
Fig. 9B is a cross section of a case.where the light source support of Fig. 9A is attached to a reflector plate and a light source is supported by the light source support.
Fig. 10 is a cross section of a case where the sixth embodiment is used in a lighting apparatus.
Fig. 11 is a cross section of a case where the sixth embodiment of the present invention is used in a liquid crystal display apparatus.
Fig. 12 is an installation drawing of the light source support of the conventional art.

### BEST MODE FOR CARRYING OUT THE INVENTION

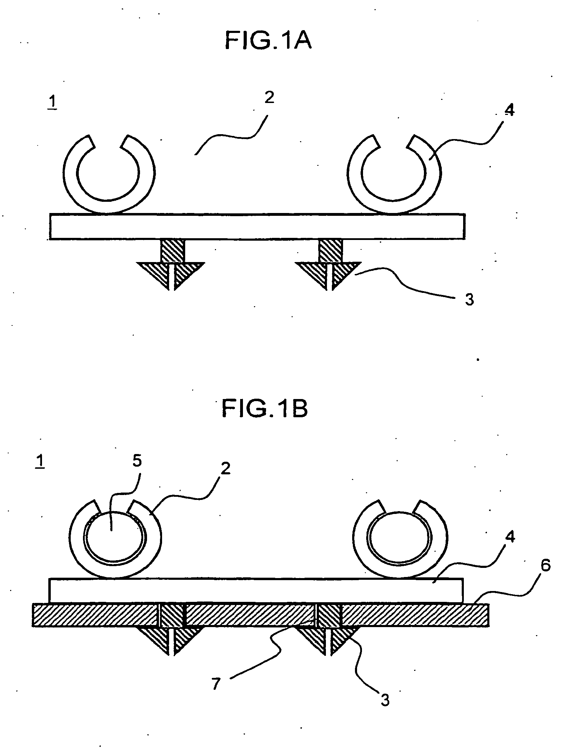

The first embodiment of the present invention will now be described referring to Fig. 1. Fig. 1A shows a cross section of a light source support of the first embodiment of the present invention, and Fig. 1B shows a cross section of a case where the light source support of (a) is attached to a reflector plate and a light source is supported by the light source support.

In each embodiment herein, description is provided for examples in which a fluorescent tube is used as a light source and a reflector plate is used as a mounting plate.

Referring to Fig. 1, a light source support 1 is formed by, on a base 4, a support member 2 to support a circular fluorescent tube 5, and a fastener member 3 provided on the side of base 4 opposite the side on which support member 2 is disposed.

Support member 2 is made from transparent material, and a cross section thereof is a shape having a notch cut in one part of an arc, such that when fluorescent tube 5 is inserted into the notched position fluorescent tube 5 can be fixed to support member 2.

Further, fastener member 3 is made from coloured material, and the base 4 side thereof comprises a neck part 3a having a diameter slightly smaller than that of a through hole 7 provided in a reflector plate 6, and a head part 3b having a diameter larger than that of through hole 7. When fastener member 3 is attached to through hole 7, neck part 3a fits into through hole 7 and head part 3b contacts against the surface of the side opposite the side of reflector plate 6 on which the light source is disposed, thereby preventing light source support 1 from coming off and falling from reflector plate 6.

Further, as with support member 2, base 4 is made from transparent material and acts as a mounting for support member 2:

When fluorescent tube 5 is attached to reflector plate 6 by means of light source support 1 and lit using the above configuration, light emitted from fluorescent tube 5 is irradiated towards the side on which fluorescent tube 5 is disposed more than towards reflector plate 6, and because fastener member 3 is coloured almost no light passes through to the side opposite the side of reflector plate 6 on which fluorescent tube 5 is disposed, and thus the above problem of the example of the conventional art can be solved.

However, as seen in Fig. 1, when the configuration is such that fastener member 3 is not hidden behind fluorescent tube 5 when viewed from the side opposite the side on which the reflector plate is disposed with respect to fluorescent tube 5, only the part where the coloured fastener member is present is darkened. Accordingly, in a case where uniform light is required such as, for example, for a backlight apparatus of a liquid crystal display, the concern arises that when using the above light source support 1, partially dark locations will be generated and what can be considered a satisfactory lighting situation will not be obtained.

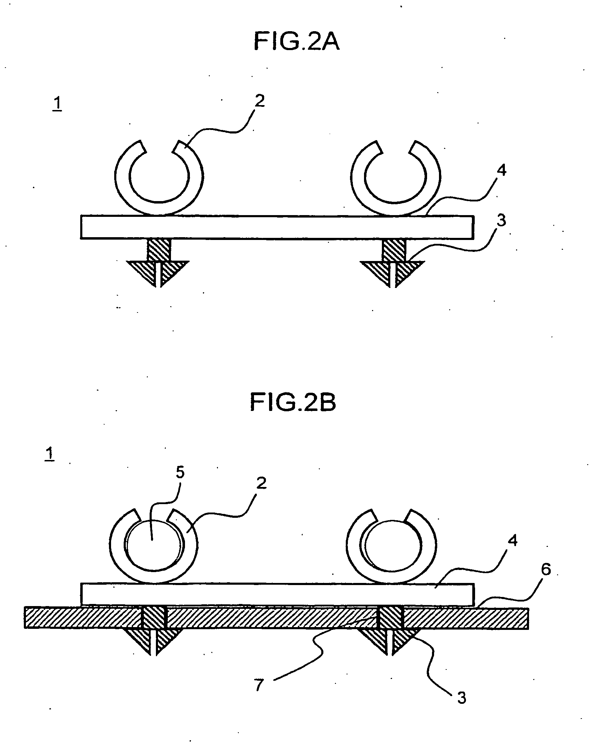

Therefore, in the second embodiment an improved example of the above light source support is described. The second embodiment is configured as illustrated in Fig. 2.

Fig. 2A illustrates a cross section of the light source support of the second embodiment of the present invention, and Fig. 2B is a cross section of a case where the light source support of Fig. 2A is attached to a reflector plate and a light source is supported by the light source support.

To avoid duplicate description, only the point in which the second embodiment differs from the first embodiment will be described. The second embodiment differs from the first embodiment in that fastener member 3 and support member 2 are configured such that fastener member 3 is in a position that is hidden behind fluorescent tube 5 when fastener member 3 is viewed from the side opposite the side on which the reflector plate is disposed with respect to fluorescent tube 5. More specifically, fluorescent tube 5 supported by support member 2, and fastener member 3 are disposed facing each other and sandwiching base 4.

By adopting this configuration, a coloured fastener member is not noticeable when viewed from the side opposite the side on which the reflector plate is disposed with respect to fluorescent tube 5, and in a case where uniform light is required such as, for example, for a backlight apparatus of a liquid crystal display, it is possible to prevent the occurrence of patches of dark areas.

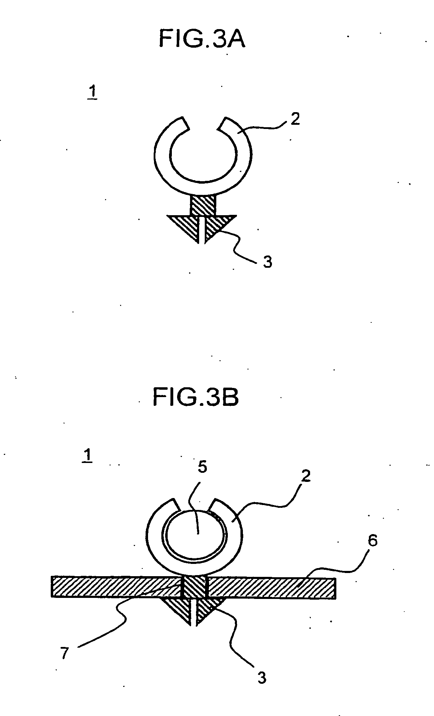

Herein, for both Fig. 1 and Fig. 2 of embodiment 1 and embodiment 2 of the present invention, description is made for the case where a plurality of support member 2 and fastener member 3 are provided. However, the invention is not limited to a case where a plurality of support member 2 and fastener member 3 are provided, and only one each of support member 2 and fastener member 3 may be provided. The same also applies for each embodiment described hereafter. Further, when only one of each member is provided, as shown in Fig. 3, base 4 may be eliminated and a configuration in which fastener member 3 is directly attached to support member 2 may be employed.

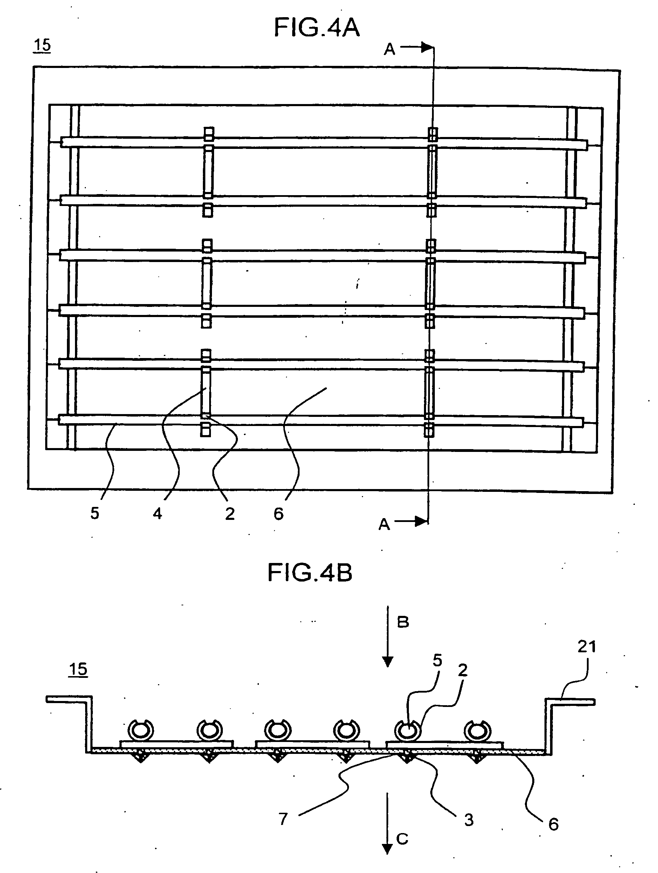

Next, referring to Fig. 4, an example is described in which the second embodiment is applied to a lighting apparatus. Fig. 4A shows a schematic elevation of the lighting apparatus of the present invention, and Fig. 4B shows a schematic cross section of Fig. 4A.

In Fig. 4, a lighting apparatus 15 consists of a plurality of fluorescent tubes 5 connected to a driving apparatus (not shown in the figure) that are attached to a reflector plate 6 by means of the light source support illustrated in the second embodiment. Reflector plate 6 is disposed facing the plurality of fluorescent tubes 5, and a frame 21 is attached thereto to fix lighting apparatus 15 to another element, and specific examples thereof include the surface of an aluminum plate coated with a high reflectivity coating, or the surface of an aluminum plate faced with a high reflectivity sheet.

By adopting the above configuration, when fluorescent tube 5 is lit by a driving apparatus, because fastener member 3 is coloured, light emitted by fluorescent tube 5 does not permeate in the direction opposite the side of reflector plate 6 on which fluorescent tube 5 is disposed (direction of arrow C in Fig. 4B), and moreover, when fluorescent tube 5 is viewed from the side of fluorescent tube 5 opposite fastener member 3 (i.e., the direction of arrow B in Fig. 4B), fastener member 3 is hidden by fluorescent tube 5. Accordingly, because the coloured part is behind fluorescent tube 5 no dark place of low reflectivity exists, and a lighting apparatus can be provided having uniform luminescence with few inconsistencies in brightness.

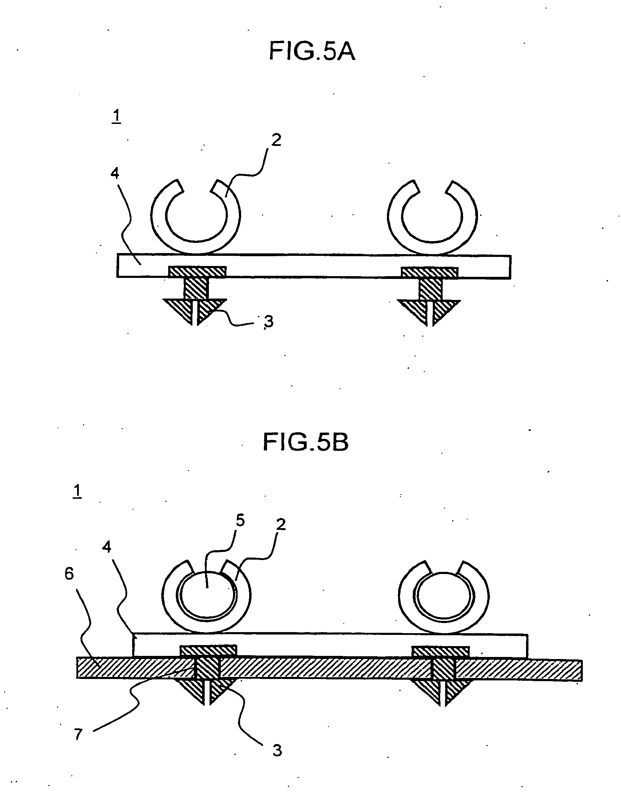

In the above first embodiment and the second embodiment, the boundary of differing colours for fastener member 3 and base 4 may not necessarily be distinct, and moreover, as shown in Fig. 5, one part of base 4 may be coloured the same as fastener member 3. Further, even in this case, when fluorescent tube 5 and a coloured part are disposed to face each other with respect to base 4, such that the coloured part is hidden by fluorescent tube 5 when fluorescent tube 5 is viewed from the side of fluorescent tube 5 opposite fastener member 3, uniform luminescence with few inconsistencies in brightness can be provided, as in the above example.

In the above, examples are described in which a light source support is formed as one unit comprising a plurality of colours. However, a configuration having a similar effect is not limited to a case of forming the light source support as one unit.

Next, an embodiment in the case where a plurality of colours are not formed into one unit will be described by way of the third, fourth, and fifth embodiments.

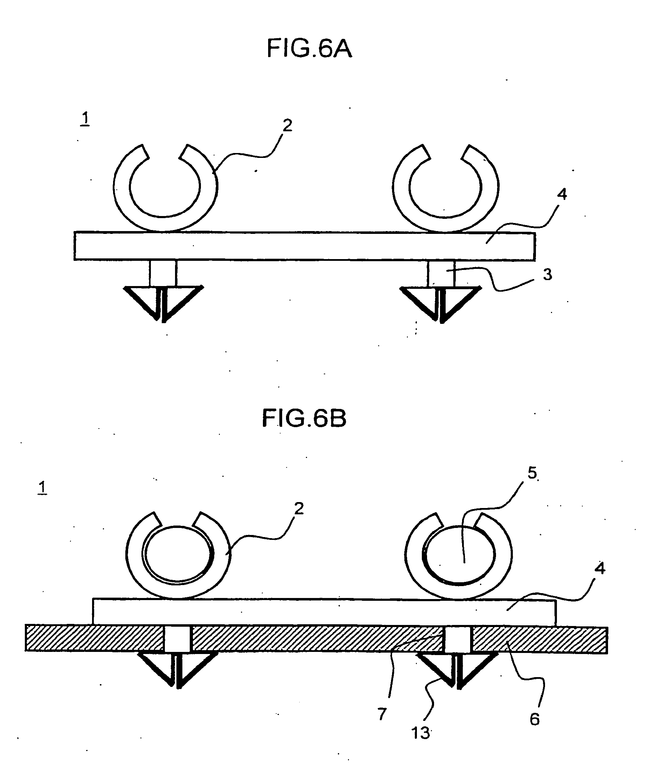

The third embodiment is configured as shown in Fig. 6. Fig. 6A shows a cross section of the light source support of the third embodiment of the present invention, and Fig. 6B shows a cross section for a case where the light source support of (a) is attached to a reflector plate and a light source is supported by the light source support.

To avoid duplicate description, only the point in which this third embodiment differs from the second embodiment will be described. In the second embodiment, fastener member 3 is formed from coloured material. In contrast, in the third embodiment a difference from the second embodiment is that fastener member 3 is transparent, as with support member 2 and base 4, and a coloured membrane 13 is added on the surface of the side of the transparent fastener member 3 opposite the side on which fluorescent tube 5 is disposed. A specific means for forming this membrane 13 includes, for example, coating with a coloured material, metal plating, attaching coloured tape, and the like.

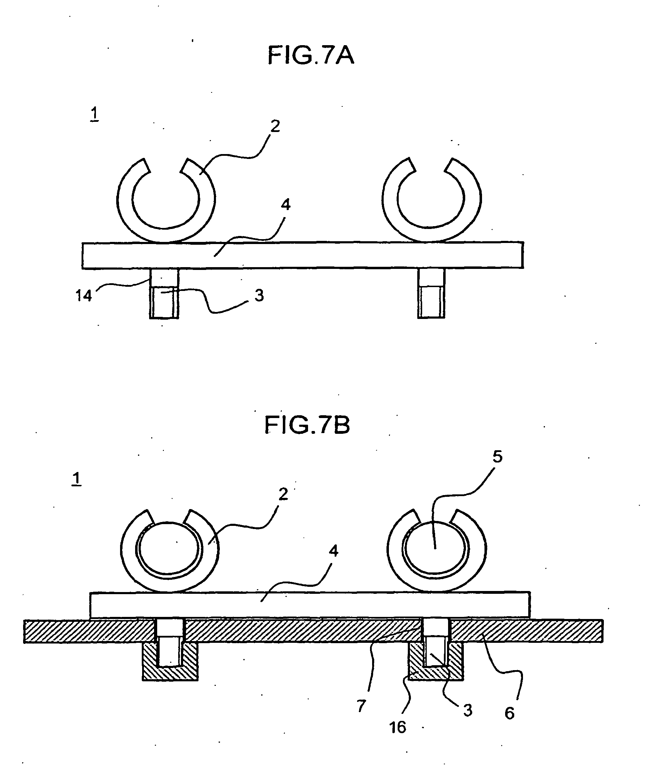

Further, Fig. 7A shows a cross section of the light source support of the fourth embodiment of the present invention, and Fig. 7B shows a cross section for a case in which the light source support of (a) is attached to a reflector plate and a light source is supported by the light source support.

To avoid duplicate description, only the points in which this fourth embodiment differs from the second embodiment will be described. In the second embodiment fastener member 3 is formed from coloured material. In contrast, in the fourth embodiment a difference from the second embodiment is that fastener member 3 is transparent, as with support member 2 and base 4. Furthermore, fastener member 3 comprises a screw 14 having an outer diameter smaller than through hole 7 provided in reflector plate 6, and after inserting fastener member 3 through the through hole 7 of reflector plate 6, light source support 2 is attached to reflector plate 6 by screwing a colored cover 16 fabricated in a form that is at least larger than the outer circumference of through hole 7.

Specific examples of cover 16 include one fabricated from coloured resin material or metal material.

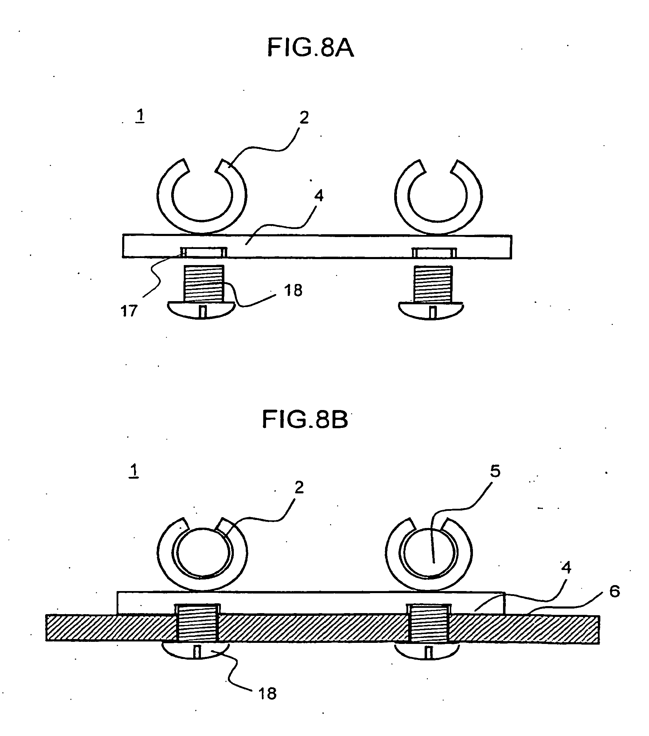

Further, Fig. 8A shows a cross section of the light source support of the fifth embodiment of the present invention, and Fig. 8B shows a cross section for a case in which the light source support of Fig. 8A is attached to a reflector plate and a light source is supported by the light source support.

To avoid duplicate description, for this fifth embodiment also, only the points in which it differs from the second embodiment will be described. While in the second embodiment fastener member 3 is coloured, a difference in the fifth embodiment is that fastener member 3 is eliminated and a member for fastening 17 is provided in the position of base 4 in which fastener member 3 is attached in the second embodiment, and after inserting a coloured fastening means 18 through the through hole 7 of reflector plate 6, fastening means 18 is fastened to member for fastening 17.

Specific examples of the above member for fastening 17 and fastening means 18 include a screw hole as an example of member for fastening 17 and a coloured (may be metal or resin) screw as an example of fastening means 18, however the examples are not limited thereto.

As described above, when fabricated as described in the third, fourth and fifth embodiments, as in the second embodiment it is possible to prevent light from permeating to the side opposite the side of reflector plate 6 on which fluorescent tube 5 is disposed, and also, in a case where uniform light is required, such as, for example, for a backlight apparatus of a liquid crystal display, it is possible to prevent the occurrence of partly dark areas. Accordingly, even when the third, fourth or fifth embodiment is applied to the above example of applying the second embodiment to a lighting apparatus, a lighting apparatus providing uniform brightness with few inconsistencies can be provided. Further, since a plurality of colours are not integrated into one unit, the production process is simplified.

For the third, fourth, and fifth embodiments, examples were illustrated in which a modification was added to one part of the second embodiment, and a similar modification can also be applied to the first embodiment. In this case also, as with the first embodiment light can be prevented from permeating to the side opposite the side of reflector plate 6 on which fluorescent tube 5 is disposed.

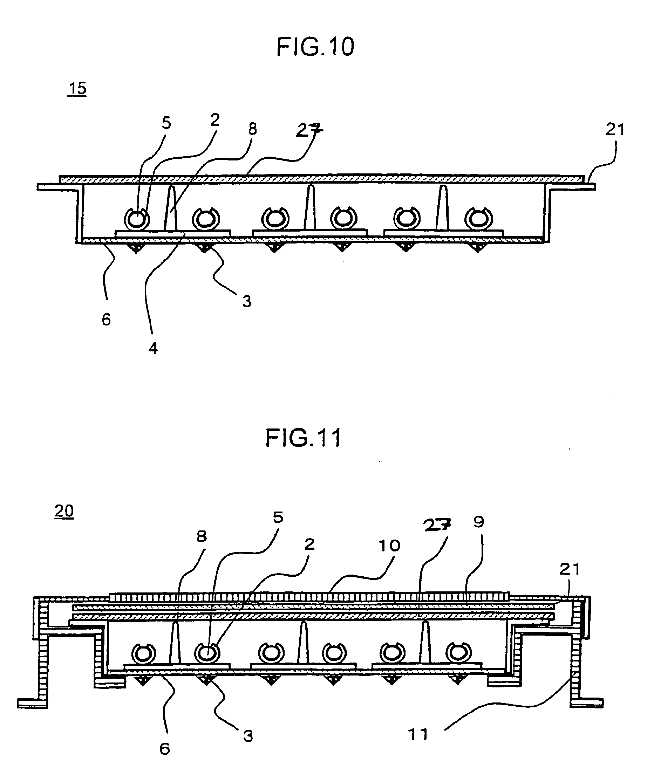

A further improvement can be added to the first to fifth embodiments described above. Specifically, in the case of a lighting apparatus requiring uniform light, such as, for example, a backlight apparatus of a liquid crystal display, a diffusion plate 27 (see Fig. 10) to diffuse light emitted from fluorescent tube 5 as planar, uniform light may be disposed on the side of fluorescent tube 5 opposite reflector plate 6. However, this diffusion plate 27 may sometimes warp due to receiving the effects of heat or humidity from fluorescent tube 5. If the extent of such warping is significant, the problem arises that the light-diffusing effect, which is the function of diffusion plate 27, is diminished, and a condition of planar, uniform lighting is no longer achieved.

Therefore, a means for preventing warping of diffusion plate 27 is required, and by integrating this means for preventing warping into the first to fifth embodiments, warping of diffusion plate 27 can be prevented without increasing the number of component parts of the embodiments.

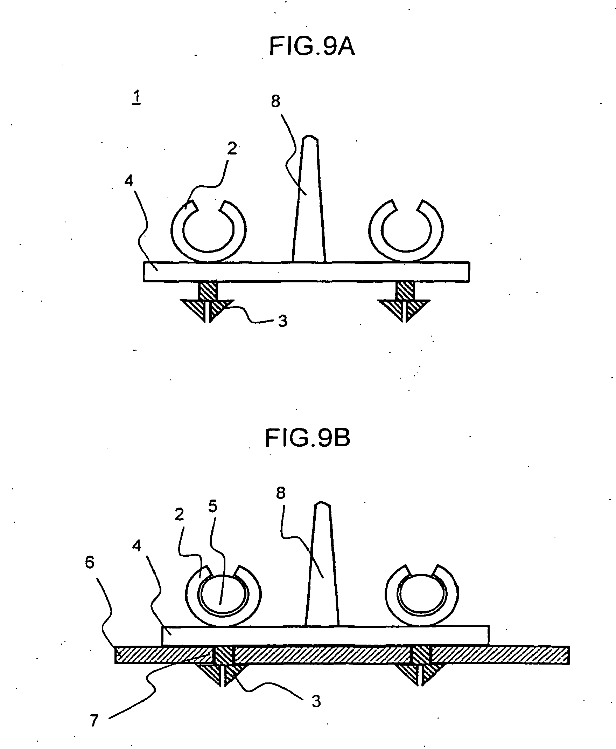

As an embodiment in this case, the sixth embodiment will be described as an improved example of the second embodiment referring to Fig. 9. Fig. 9A is a cross section of the light source support of the sixth embodiment of the present invention, and Fig. 9B is a cross section for a case where the light source support of Fig. 9A is attached to a reflector plate and a light source is supported by the light source support.

To avoid duplicate description, only the modification added from the second embodiment will be described for the sixth embodiment also. The modification is as follows. As a means for preventing warping of diffusion plate 7, from the surface of the side of base 4 on which support member 2 is disposed, a truncated cone-like protrusion 8 is formed that protrudes from a side of fluorescent tube 5 retained by support member 2 that is most opposite base 4.

An example when this light source support is used in lighting apparatus 15 is formed as illustrated in Fig. 10. Fig. 10 shows a cross section of lighting apparatus 15.

Regarding Fig. 10, the differences from the example of applying the second embodiment to lighting apparatus 15 illustrated in Fig. 4 are that the sixth embodiment is applied in place of the second embodiment, and that a diffusion plate 27 is provided facing fluorescent tube 5 that diffuses light to the side opposite the side on which reflector plate 6 is disposed.

By configuring lighting apparatus 15 in the above manner, a lighting apparatus can be fabricated at low cost in which light does not permeate to the side of reflector plate 6 opposite the fluorescent tube 5 side, and in which even if diffusion plate 27 warps to the fluorescent tube 5 side the warping is controlled by protrusion 8.

Further, an example using this lighting apparatus 15 in a liquid crystal display apparatus 20 is shown in Fig. 11. Fig. 11 shows, as additions to the lighting apparatus illustrated in Fig. 10, a liquid crystal panel 10 provided on the side of diffusion plate 27 opposite the side on which reflector plate 6 is disposed, a driving apparatus (not shown in the figure) for liquid crystal panel 10, and an optical sheet 9 disposed between liquid crystal panel 10 and diffusion plate 27, which are retained by a frame 11.

No specific description is made herein regarding the above optical sheet 9, liquid crystal panel 10 and frame 11, as they can be applied by appropriately combining known techniques.

Forming the apparatus in the manner described above not only eliminates the problem concerning light permeating to the side of reflector plate 6 opposite the fluorescent tube 5 side, but also means brightness inconsistencies on the display of liquid crystal panel 10 caused by a coloured fastener member 3 are not generated, and moreover, brightness inconsistencies caused by warping of diffusion plate 27 do not arise. Thus it is possible to provide liquid crystal display apparatus 20 having a favourable lighting condition with no brightness inconsistencies over a long period.

The above descriptions concerned cases in which fluorescent tube 5 is used as a light source, however even in cases using other light sources, such as, for example, an LED, the above light source support can exhibit a similar effect. Further, it is clear that the light source supports described in each embodiment can be respectively applied to a lighting apparatus and a liquid crystal display apparatus.

Furthermore, concerning the example of support member 2, while explanation was made only regarding cases where support member 2 is fabricated from transparent material and the cross section thereof forms a shape having a notch cut in one part of an arc, it is obvious that suitable modifications can be added thereto to match the shape of a light source. Further, with regard to other configurations also, they are not limited to the above examples and suitable modifications can be added in accordance with a design.

### INDUSTRIAL APPLICABILITY

As described above, according to the present invention it is possible to prevent light emitted from a light source from permeating to the side of a mounting plate opposite the light source.

Further, the fastener member is disposed in a position facing a light source supported by the support member. By adopting this configuration, when the light source is viewed from the side opposite the mounting plate, because the fastener member is disposed behind the light source, the fastener member is not noticeable even when, for example, the fastener member is made from coloured materials.

In addition, for a light source support fabricated from transparent material and comprising a base, a support member supporting a light source provided on one side of the base, and a member for fastening provided on the other side of the base, when a light source support fastening the base to the mounting plate is made by attaching a coloured fastening means to the member for fastening via a through hole provided in a mounting plate, the light source support can be fabricated easily because the light source support is not made in a plurality of colours, and moreover, because a fastener member is not previously integrated into the base.

Furthermore, in this case also, if the member for fastening is disposed in a position facing a light source supported by the support member, when the light source is viewed from the side opposite the mounting plate, because the fastener member is disposed behind the light source, the fastener member is not noticeable even if the fastener member is coloured.

In addition, there is provided a light source support characterized by comprising as one unit a light source support and a protrusion provided in a condition protruding further on the light source side than the light source. According to this configuration, even in a case where a member disposed on the side opposite the fastener member with respect to a light source warps towards the light source side, the amount of such warping can be controlled by the protrusion.

Furthermore, there is provided a lighting apparatus comprising a light source support, a light source supported by the support member of the light source support, and, as the above mounting plate, a reflector plate that reflects light emitted from the light source. According to this configuration, when the lighting apparatus is viewed from the opposite side with respect to a light source on which the reflector plate is disposed, light does not leak from behind the reflector plate.

Further, there is provided a lighting apparatus comprising a light source support, a light source supported by the support member of the light source support, a reflector plate as the above mounting plate, that reflects light emitted from the light source, a diffusion plate that diffuses and transmits light emitted from the light source and which is provided in the direction opposite to the direction in which the reflector plate is disposed with respect to the light source, and a protrusion integrated as one piece into the light source support and provided in a condition protruding towards the diffusion plate. According to this configuration, a lighting apparatus can be provided that regulates the amount of warping even when a diffusion plate is warped, to provide uniform planar light.

Furthermore, there is provided a liquid crystal display apparatus characterized by having the above lighting apparatus, and a liquid crystal panel provided on the side of the diffusion plate opposite the side on which a light source is disposed. According to this configuration, not only does light not permeate to the side of the reflector plate opposite the side on which the light source is disposed, but moreover, since brightness inconsistencies caused by warping of the diffusion plate do not occur, the brightness emitted from the display screen of the liquid crystal display apparatus can be made uniform.

## Claims

1. A light source support device comprising a support portion (2) for supporting a light source (5), and a locking portion (3),
wherein, a light source (5) supported by the support portion (2) is attached to a mounting plate (6) by mounting the locking portion (3) in a through hole (7) provided in the mounting plate (6),
**characterized in that** the support portion (2) is fabricated from a transparent material and the locking portion (3) is fabricated from coloured material.

2. A light source support device according to claim 1.
wherein the locking portion (3) is provided with a means (13) for preventing light transmission that prevents the light emitted from the light source (5) from being transmitted via the through hole (7) to the side of the mounting plate (6) opposite to the light source side.

3. The light source support device of claim 2, wherein the means (13) for preventing light transmission comprises a coloured membrane (13) provided on the surface of the side of the locking portion (3) opposite the side on which the light source (5) is disposed.

4. The light source support device of claim 2, wherein the means (13) for preventing light transmission comprises a cover that covers a part of the locking portion that protrudes from the mounting plate (6) when the light source support device is mounted on the mounting plate (6).

5. The light source support device according to any one of claims 1 to 4, wherein the locking portion (3) is disposed in a position facing the light source (5) supported by the support portion.

6. A light source support device according to claim 1, further comprising a base (4), wherein the support portion for supporting a light source is provided on one side of the base (4), and the locking portion (3) provided on the other side of the base (4), wherein the base (4) is mounted on the mounting plate (6) by locking locking means on the locking portion via the through hole (7), while preventing the light emitted from the light source (5) from being transmitted via the through hole (7).

7. The light source support device according to claim 6, wherein the locking portion (3) is disposed in a position facing a light source (5) supported by the support portion.

8. A light source support device according to any one of claims 1 to 7, further comprising a protrusion (8) that is integrally formed on the light source side such that it protrudes beyond the light source.

9. A lighting device (15) comprising the light source support device according to any one of claims 1 to 8, a light source (5) supported by the support portion (2) of the light source support device, and as the mounting plate (6), a reflector plate for reflecting the light emitted from the light source.

10. A lighting device (15) comprising the light source support device according to any one of claims 1 to 7, a light source (5) supported by the support portion (2) of the light source support device, a reflector plate as the mounting plate (6) for reflecting the light emitted from the light source (5), a diffusion plate (27) disposed in the direction opposite the direction in which the reflector plate is disposed with respect to the light source (5) and diffusing and transmitting the light emitted from the light source (5), and a protrusion (8) integrally formed with the light source support such that it protrudes towards the diffusion plate (27).

11. A liquid crystal display device (20) comprising the lighting device (15) according to claim 9 or 10 and a liquid crystal panel provided on a side of the diffusion plate (27) opposite the side on which the light source (5) is disposed.

12. A light source support device according to claim 1, wherein the support portion (2) is locked on a mounting plate (6) by covering a portion of the locking portion (3) that protrudes beyond the mounting plate (6) when the locking portion (3) is mounted in the through hole (7), with a coloured locking means.

13. A light source support device according to any one of claims 1 to 8 and 12. wherein the mounting plate (6) is a reflector plate.

14. A light source support device according to claim 1,
further comprising
a base (4) wherein the support portion for supporting a light source is provided on one side of the base (4), and the locking portion (3) provided on the other side of the base (4),
a protrusion (8) formed on the side of said light source (5) and protrudes from the side of the base (4) beyond said light source (5),
the light source support device being configured so that the support portion (2) supporting the light source (5) can be attached to the mounting plate (6) by causing said locking portion (3) to be mounted in the through-hole (7).

15. The light source support device according to claim 14, wherein said mounting plate (6) is a reflecting plate.

16. A light source support device according to claim 14, wherein the protrusion is a cone shape reducing the radius from the basis towards the end.

17. A lighting device (15) comprising:
the light source support device of claim 14, a light source (5) supported by said light source support device and a reflecting plate as said mounting plate (6) that reflects the light emitted by said light source (5).

18. A liquid-crystal display device (20) comprising the lighting apparatus of claim 17 and a liquid-crystal panel.

## Patentansprüche

1. Lichtquellen-Tragvorrichtung, mit einem Tragabschnitt (2), um eine Lichtquelle (5) zu tragen, und einem Verriegelungsabschnitt (3),
wobei eine durch den Tragabschnitt (2) getragene Lichtquelle (5) an einer Montageplatte (6) durch Montieren des Verriegelungsabschnitts (3) in einem in der Montageplatte (6) vorgesehenen Durchgangsloch (7) befestigt ist,
**dadurch gekennzeichnet, dass** der Tragabschnitt (2) aus einem lichtdurchlässigen Material hergestellt ist und der Verriegelungsabschnitt (3) aus einem gefärbten Material hergestellt ist.

2. Lichtquellen-Tragvorrichtung nach Anspruch 1,
wobei der Verriegelungsabschnitt (3) mit einem Mittel (13) zum Verhindern eines Lichtdurchgangs versehen ist, das verhindert, dass Licht, das von der Lichtquelle (5) ausgesendet wird, durch das Durchgangsloch (7) zu der Seite der Montageplatte (6) gegenüber der Lichtquellenseite durchgelassen wird.

3. Lichtquellen-Tragvorrichtung nach Anspruch 2, wobei das Mittel (13) zum Verhindern eines Lichtdurchgangs eine gefärbte Membran (13) aufweist, die auf der Oberfläche der Seite des Verriegelungsabschnitts (3) gegenüber der Seite, auf der die Lichtquelle (5) angeordnet ist, vorgesehen ist.

4. Lichtquellen-Tragvorrichtung nach Anspruch 2, wobei das Mittel (13) zum Verhindern eines Lichtdurchgangs eine Abdeckung aufweist, die einen Teil des Verriegelungsabschnitts abdeckt, der von der Montageplatte (6) vorsteht, wenn die Lichtquellen-Tragvorrichtung an der Montageplatte (6) montiert ist.

5. Lichtquellen-Tragvorrichtung nach einem der Ansprüche 1 bis 4, wobei der Verriegelungsabschnitt (3) an einer Position angeordnet ist, die der durch den Tragabschnitt getragenen Lichtquelle (5) zugewandt ist.

6. Lichtquellen-Tragvorrichtung nach Anspruch 1, ferner mit einer Basis (4), wobei der Tragabschnitt zum Tragen einer Lichtquelle auf einer Seite der Basis (4) vorgesehen ist und der Verriegelungsabschnitt (3) auf der anderen Seite der Basis (4) vorgesehen ist, wobei die Basis (4) an der Montageplatte (6) durch Verriegeln von Verriegelungsmitteln an dem Verriegelungsabschnitt durch das Durchgangsloch (7) montiert ist, wobei verhindert wird, dass Licht, das von der Lichtquelle (5) ausgesendet wird, durch das Durchgangsloch (7) durchgelassen wird.

7. Lichtquellen-Tragvorrichtung nach Anspruch 6, wobei der Verriegelungsabschnitt (3) an einer Position angeordnet ist, die einer durch den Tragabschnitt getragenen Lichtquelle (5) zugewandt ist.

8. Lichtquellen-Tragvorrichtung nach einem der Ansprüche 1 bis 7, ferner mit einem Vorsprung (8), der an der Lichtquellenseite einteilig ausgebildet ist, so dass er über die Lichtquelle vorsteht.

9. Beleuchtungsvorrichtung (15), die eine Lichtquellen-Tragvorrichtung nach einem der Ansprüche 1 bis 8, eine Lichtquelle (5), die durch den Tragabschnitt (2) der Lichtquellen-Tragvorrichtung getragen wird, und als Montageplatte (6) eine Reflektorplatte zum Reflektieren des von der Lichtquelle ausgesendeten Lichts enthält.

10. Beleuchtungsvorrichtung (15), die die Lichtquellen-Tragvorrichtung nach einem der Ansprüche 1 bis 7, eine durch den Tragabschnitt (2) der Lichtquellen-Tragvorrichtung getragene Lichtquelle (5), eine Reflektorplatte als Montageplatte (6), um das von der Lichtquelle (5) ausgesendete Licht zu reflektieren, eine Diffusionsplatte (27), die in der Richtung angeordnet ist, die zu der Richtung entgegengesetzt ist, in der die Reflektorplatte in Bezug auf die Lichtquelle (5) angeordnet ist, um das von der Lichtquelle (5) ausgesendete Licht zu streuen und durchzulassen, und einen Vorsprung (8), der einteilig mit dem Lichtquellenträger ausgebildet ist, so dass er zu der Diffusionsplatte (27) vorsteht, enthält.

11. Flüssigkristall-Anzeigevorrichtung (20), die die Beleuchtungsvorrichtung (15) nach einem der Ansprüche 9 oder 10 und eine Flüssigkristalltafel, die auf einer Seite der Diffusionsplatte (27) gegenüber der Seite, auf der die Lichtquelle (5) angeordnet ist, vorgesehen ist, enthält.

12. Lichtquellen-Tragvorrichtung nach Anspruch 1, wobei der Tragabschnitt (2) an einer Montageplatte (6) verriegelt ist, indem er einen Abschnitt des Verriegelungsabschnitts (3), der über die Montageplatte (6) vorsteht, wenn der Verriegelungsabschnitt (3) in dem Durchgangsloch (7) montiert ist, mit einem gefärbten Verriegelungsmittel abdeckt.

13. Lichtquellen-Tragvorrichtung nach einem der Ansprüche 1 bis 8 und 12, wobei die Montageplatte (6) eine Reflektorplatte ist.

14. Lichtquellen-Tragvorrichtung nach Anspruch 1, die ferner enthält:
eine Basis (4), wobei der Tragabschnitt zum Tragen einer Lichtquelle auf einer Seite der Basis (4) vorgesehen ist und der Verriegelungsabschnitt (3) auf der anderen Seite der Basis (4) vorgesehen ist,
einen Vorsprung (8), der auf der Seite der Lichtquelle (5) ausgebildet ist und von der Seite der Basis (4) über die Lichtquelle (5) vorsteht,
wobei die Lichtquellen-Tragvorrichtung in der Weise konfiguriert ist, dass der Tragabschnitt (2), der die Lichtquelle (5) trägt, an der Montageplatte (6) befestigt werden kann, indem bewirkt wird, dass der Verrieglungsabschnitt (3) in dem Durchgangsloch (7) montiert wird.

15. Lichtquellen-Tragvorrichtung nach Anspruch 14, wobei die Montageplatte (6) eine reflektierende Platte ist.

16. Lichtquellen-Tragvorrichtung nach Anspruch 14, wobei der Vorsprung kegelförmig ist, wobei der Radius von der Basis zu dem Ende abnimmt.

17. Beleuchtungsvorrichtung (15), mit:
der Lichtquellen-Tragvorrichtung nach Anspruch 14, einer Lichtquelle (5), die durch die Lichtquellen-Tragvorrichtung getragen wird, und einer reflektierende Platte als Montageplatte (6), die das von der Lichtquelle (5) ausgesendete Licht reflektiert.

18. Flüssigkristallanzeigevorrichtung (20), die die Beleuchtungsvorrichtung nach Anspruch 17 und eine Flüssigkristalltafel enthält.

## Revendications

1. Dispositif de support de source de lumière comprenant une partie de support (2) pour supporter une source de lumière (5), et une partie de verrouillage (3),
dans lequel, une source de lumière (5) supportée par la partie de support (2) est attachée à une plaque de montage (6) en montant la partie de verrouillage (3) dans un trou traversant (7) prévu dans la plaque de montage (6),
**caractérisé en ce que** la partie de support (2) est fabriquée à partir d'une matière transparente et la partie de verrouillage (3) est fabriquée à partir de matière colorée.

2. Dispositif de support de source de lumière selon la revendication 1,
dans lequel la partie de verrouillage (3) est munie d'un moyen (13) pour empêcher une transmission de lumière qui empêche la lumière émise depuis la source de lumière (5) d'être transmise par l'intermédiaire du trou traversant (7) vers le côté de la plaque de montage (6) opposé au côté source de lumière.

3. Dispositif de support de source de lumière selon la revendication 2, dans lequel le moyen (13) pour empêcher une transmission de lumière comprend une membrane colorée (13) prévue sur la surface du côté de la partie de verrouillage (3) opposé au côté sur lequel la source de lumière (5) est disposée.

4. Dispositif de support de source de lumière selon la revendication 2, dans lequel le moyen (13) pour empêcher une transmission de lumière comprend un couvercle qui couvre une portion de la partie de verrouillage qui dépasse de la plaque de montage (6) quand le dispositif de support de source de lumière est monté sur la plaque de montage (6).

5. Dispositif de support de source de lumière selon l'une quelconque des revendications 1 à 4, dans lequel la partie de verrouillage (3) est disposée dans une position faisant face à la source de lumière (5) supportée par la partie de support.

6. Dispositif de support de source de lumière selon la revendication 1, comprenant en outre une base (4), dans lequel la partie de support pour supporter une source de lumière est prévue sur un côté de la base (4), et la partie de verrouillage (3) est prévue de l'autre côté de la base (4), dans lequel la base (4) est montée sur la plaque de montage (6) en verrouillant le moyen de verrouillage sur la partie de verrouillage par l'intermédiaire du trou traversant (7), tout en empêchant la lumière émise depuis la source de lumière (5) d'être transmise par l'intermédiaire du trou traversant {7).

7. Dispositif de support de source de lumière selon la revendication 6, dans lequel la partie de verrouillage (3) est disposée dans une position faisant face à une source de lumière (5) supportée par la partie de support.

8. Dispositif de support de source de lumière selon l'une quelconque des revendications 1 à 7, comprenant en outre une protubérance (8) qui est formée d'un seul tenant sur le côté source de lumière de sorte qu'elle dépasse au-delà de la source de lumière.

9. Dispositif d'éclairage (15) comprenant le dispositif de support de source de lumière selon l'une quelconque des revendications 1 à 8, une source de lumière (5) supportée par la partie de support (2) du dispositif de support de source de lumière, et en tant que plaque de montage (6), une plaque formant réflecteur pour réfléchir la lumière émise depuis la
source de lumière.

10. Dispositif d'éclairage (15) comprenant le dispositif de support de source de lumière selon l'une quelconque des revendications 1 à 7, une source de lumière (5) supportée par la partie de support (2) du dispositif de support de source de lumière, une plaque formant réflecteur en tant que plaque de montage (6) pour réfléchir la lumière émise depuis la source de lumière (5), une plaque de diffusion (27) disposée dans le sens opposé au sens dans lequel la plaque formant réflecteur est disposée par rapport à la source de lumière (5) et diffusant et transmettant la lumière émise depuis la source de lumière (5), et une protubérance (8) formée d'un seul tenant avec le support de source de lumière de sorte qu'elle dépasse vers la plaque de diffusion (27).

11. Dispositif d'affichage à cristaux liquides (20) comprenant le dispositif d'éclairage (15) selon la revendication 9 ou 10 et un panneau à cristaux liquides prévu sur un côté de la plaque de diffusion (27) opposé au côté sur lequel la source de lumière (5) est disposée.

12. Dispositif de support de source de lumière selon la revendication 1, dans lequel la partie de support (2) est verrouillée sur une plaque de montage (6) en couvrant une portion de la partie de verrouillage (3) qui dépasse au-delà de la plaque de montage (6) lorsque la partie de verrouillage (3) est montée dans le trou traversant (7), avec un moyen de verrouillage coloré.

13. Dispositif de support de source de lumière selon l'une quelconque des revendications 1 à 8 et 12, dans lequel la plaque de montage (6) est une plaque formant réflecteur.

14. Dispositif de support de source de lumière selon la revendication 1,
comprenant en outre
une base (4), dans laquelle la partie de support pour supporter une source de lumière est prévue sur un côté de la base (4), et la partie de verrouillage (3) est prévue de l'autre côté de la base (4),
une protubérance (8) formée sur le côté de ladite source de lumière (5) et qui dépasse du côté de la base (4) au-delà de ladite source de lumière (5),
le dispositif de support de source de lumière étant configuré de sorte que la partie de support (2) supportant la source de lumière (5) peut être attachée à la plaque de montage (6) en amenant ladite partie de verrouillage (3) à être montée dans le trou traversant (7).

15. Dispositif de support de source de lumière selon la revendication 14, dans lequel ladite plaque de montage (6) est une plaque réfléchissante.

16. Dispositif de support de source de lumière selon la revendication 14, dans lequel la protubérance présente une forme de cône réduisant le rayon de la base vers l'extrémité.

17. Dispositif d'éclairage (15) comprenant :
le dispositif de support de source de lumière selon la revendication 14, une source de lumière (5) supportée par ledit dispositif de support de source de lumière et une plaque réfléchissante en tant que plaque de montage (6) qui réfléchit la lumière émise par ladite source de lumière (5).

18. Dispositif d'affichage à cristaux liquides (20) comprenant l'appareil d'éclairage selon la revendication 17 et un panneau à cristaux liquides.
